# EUROPEAN PATENT APPLICATION

(11) **EP 4 830 522 A1**
(43) Date of publication of application: **28.10.2026**
(21) Application number: 24906611.9
(22) Date of filing: 26.11.2024
(51) Int. Cl.: A21D 2/18, A23G 1/40, A21D 2/36

(54) **FOOD COMPOSITION FOR PREPARING A CHOCOLATE-FLAVOURED PIZZA DOUGH**

(30) Priority: 18.12.2023 ES 202331048
(71) Applicant: Saldaña Bermudez, Luis, 41002 Sevilla (ES)
(72) Inventor: Saldaña Bermudez, Luis, 41002 Sevilla (ES)
(74) Representative: Cueto, Sénida
(86) International application number: PCT/ES2024/070738
(87) International publication number: WO 2025/133426

(57) **Abstract**

A food composition and method for preparing a chocolate-flavoured pizza dough, the food composition being a chocolate-flavoured pizza dough characterised by having a perfectly integrated and homogenised chocolate flavour.

## Description

There is a growing interest in the search for new edible products to make tasting more varied and appetising, for which new culinary recipes are constantly being tested and new products manufactured, generally based on mixtures and combinations of traditional food elements.

### Field of the invention

The present invention relates to a food composition for preparing a chocolate-flavoured pizza dough for use as a dessert, which only has to be hydrated and kneaded. The main feature is that the dough itself already has a perfectly integrated and homogenised characteristic chocolate flavour, which only needs to be baked for final consumption.

In this regard, in accordance with the present invention, a food composition is proposed for the manufacture of a new original product composed of perfectly integrated and homogeneous chocolate-flavoured pizza dough, which offers characteristics that are essentially different from those of prior art products.

### Background to the invention

According to the state of the art, there are numerous types of pizzas based on a convenient dough to which different ingredients are added. There is no known pizza dough that integrates the chocolate flavour into the dough itself in a homogeneous way through the preparation process.

The present invention differs completely from state of the art, and no such product as the one proposed in this invention has yet been announced or disclosed.

### Description of the invention

The recommended pizza dough is different in that it includes chocolate and cocoa as characteristic ingredients in the dough preparation process on the basis of the following compositions and steps.

The ingredients needed for preparation of the dough are, in the proportions:
- fine-grained wheat flour between about 25% - 26%
- wheat flour between about 34% - 35%
- five eggs 3%
- cinnamon powder between about 0.55% and 0.60%
- whole milk between about 2% - 3%
- salt between about 2% - 3%
- sugar between about 0.85% - 0.90%
- pure chocolate powder between about 2% - 3%
- pure cocoa powder between about 2% - 3%
- chocolate chips between about 2% - 3%
- liquid vanilla between about 0.55% - 0.60%
- olive oil between about 1.70 % - 2%
- unsalted margarine between about 1.70 % - 2%
- yeast between about 0.25% - 0.30%
- water between about 17% - 30%

The first step is to mix the ingredients described above in an electric mixer for 20 minutes until a uniform dough is formed.

Then, remove the dough from the mixer and leaving it to rest for about 15 minutes.

Section the dough into 250-gram partitions, which are the pizza bases.

Allow fermentation of the obtained portions in vacuum cooled boxes for 24 - 48 hours.

Once the fermentation is complete, the different portions of the chocolate-flavoured pizza dough are ready to be baked and consumed.

Considering that each and every one of the parts constituting the food composition for preparing a pizza dough with a perfectly integrated and homogenised chocolate flavour has been amply described, the remaining consideration is the possibility that the different parts, mixtures and components may be slightly variable to a percentage not exceeding 3%, provided that they are not capable of altering the essential points of the present Patent for Invention registration.

## Claims

1. A food composition for preparing a pizza dough having integrated and homogenised chocolate flavour comprised of the following ingredients:
- fine-grained wheat flour between about 25% - 26%
- wheat flour between about 34% - 35%
- five eggs 3%
- cinnamon powder between about 0.55% and 0.60%
- whole milk between about 2% - 3%
- salt between about 2% - 3%
- sugar between about 0.85% - 0.90%
- pure chocolate powder between about 2% - 3%
- pure cocoa powder between about 2% - 3%
- chocolate chips between about 2% - 3%
- liquid vanilla between about 0.55% - 0.60%
- olive oil between about 1.70 % - 2%
- unsalted margarine between about 1.70 % - 2%
- yeast between about 0.25% - 0.30%
- water between about 17% - 30%

2. A method for preparing perfectly integrated and homogenised chocolate-flavoured pizza dough comprised of:
- mixing the ingredients described in claim 1 in an electric mixer for 20 minutes until a uniform dough is formed;
- removing the dough from the mixer and leaving it to rest for about 15 minutes;
- sectioning the dough into 250-gram portions.
- allowing fermentation of the obtained portions in vacuum cooled boxes for 24 - 48 hours.
